# EUROPEAN PATENT SPECIFICATION

(11) **EP 3 499 804 B1**
(45) Date of publication and mention of the grant of the patent: **10.06.2020**
(21) Application number: 17923980.1
(22) Date of filing: 26.09.2017
(51) Int. Cl.: H04W 36/12, H04W 48/12

(54) **NETWORK SWITCHING METHOD AND TERMINAL DEVICE**
NETZWERKSCHALTVERFAHREN UND ENDGERÄTEVORRICHTUNG
PROCÉDÉ DE COMMUTATION DE RÉSEAU ET DISPOSITIF TERMINAL

(43) Date of publication of application: 19.06.2019
(73) Proprietor: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN); LIU, Jianhua, Dongguan Guangdong 523860 (CN)
(74) Representative: Manitz Finsterwald Patent- und Rechtsanwaltspartnerschaft mbB
(86) International application number: PCT/CN2017/103532
(87) International publication number: WO 2019/061039

(56) References cited:
- WO-A1-2017/119247
- CN-A- 101 682 415
- CN-A- 101 867 982
- CN-A- 103 442 399
- CN-A- 104 092 579
- CN-A- 105 636 133
- US-A1- 2017 034 749
- US-A1- 2017 034 808
- ERICSSON: "23.502: 5GC-EPC interworking", 3GPP DRAFT; S2-170805, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Dubrovnik, Croatia; 20170213 - 20170217 7 February 2017 (2017-02-07), XP051228096, Retrieved from the Internet: URL:http://www.3gpp.org/ftp/tsg_sa/WG2_Arc h/TSGS2_119_Dubrovnik/Docs/ [retrieved on 2017-02-07]
- SAMSUNG: "Interworking between NextGen Core and EPC", 3GPP DRAFT; S2-164670_NGC-EPC INTERWORKING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sanya, China; 20160829 - 20160902 23 August 2016 (2016-08-23), XP051139225, Retrieved from the Internet: URL:http://www.3gpp.org/ftp/tsg_sa/WG2_Arc h/TSGS2_116BIS_Sanya/Docs/ [retrieved on 2016-08-23]
- LG ELECTRONICS INC: "LTE Handover with CN Type Change for E-UTRA connected to 5GC", 3GPP DRAFT; R2-1708942, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051318740, Retrieved from the Internet: URL:http://www.3gpp.org/ftp/Meetings_3GPP_ SYNC/RAN2/Docs/ [retrieved on 2017-08-20]

## Description

### Technical Field

The present disclosure relates to the communication field, and more particularly, to a network handover method, a terminal device, and a network device. Related technologies are known from US 2017/034749 A1 and WO 2017/119247 A1.

### Background

With development of the 5G technology, a Long Term Evolution (LTE) system will support an Evolved-Universal Terrestrial Radio Access (E-UTRA) system to access to a 5G core network, or accessing, by an LTE system, to the 5G core network is a transitional and mixed deployment scheme from a 4G network to a 5G network.

In this network, terminal devices in a same LTE cell may only access to an Evolved Packet Core (EPC), or only access to the 5G core network, or may access to the EPC network and the 5G core network simultaneously.

In some cases, the terminal device needs to perform handover from one core network to another core network, which involves a large number of signaling interaction processes. Therefore, for the terminal device, how to realize core network handover to reduce signaling overhead is an urgent problem to be solved.

### Summary

The present invention is defined in the independent claims. Further embodiments of the invention are defined in the dependent claims. Implementations of the present disclosure provide a network handover method and a corresponding terminal device.

In a first aspect, a network handover method is provided. The method includes:
determining, by a terminal device, that handover from a first core network to a second core network needs to be performed; and
configuring, by the terminal device, a protocol layer according to core network types of the first core network and the second core network.

In combination with the first aspect, in some implementations of the first aspect, determining, by the terminal device, that the handover from the first core network to the second core network needs to be performed, includes:
determining, by the terminal device, that the handover from the first core network to the second core network needs to be performed according to a current service requirement.

In combination with the first aspect, in some implementations of the first aspect, determining, by the terminal device, that the handover from the first core network to the second core network needs to be performed, includes:
when the terminal device has received a trigger instruction from a network device, determining, by the terminal device, that the handover from the first core network to the second core network needs to be performed, wherein the trigger instruction is used for notifying the terminal device to perform the handover from the first core network to the second core network.

In combination with the first aspect, in some implementations of the first aspect, the method further includes:
receiving, by the terminal device, the trigger instruction sent by the network device.

In combination with the first aspect, in some implementations of the first aspect, the network device is an access network device or a core network device.

In combination with the first aspect, in some implementations of the first aspect, the trigger instruction is an S1 signaling, an N2/N3 signaling, or a radio resource control (RRC) signaling.

In combination with the first aspect, in some implementations of the first aspect, if the first core network and the second core network are core networks of different types, the method further includes:
acquiring, by the terminal device, system information of the second core network.

In combination with the first aspect, in some implementations of the first aspect, acquiring, by the terminal device, the system information of the second core network, includes:
receiving, by the terminal device, a broadcast message sent by an access network device; and acquiring the system information of the second core network from the broadcast message.

In combination with the first aspect, in some implementations of the first aspect, acquiring, by the terminal device, the system information of the second core network, includes:
sending, by the terminal device, a first RRC signaling to an access network device; and
receiving, by the terminal device, a second RRC signaling replied by the access network device, and acquiring, by the terminal device, the system information of the second core network from the second RRC signaling.

In combination with the first aspect, in some implementations of the first aspect, configuring, by the terminal device, the protocol layer according to the core network type of the first core network and the core network type of the second core network, includes:
If the first core network and the second core network are core networks of different types, updating, by the terminal device, configuration of a packet data convergence protocol (PDCP) layer corresponding to the first core network to configuration of a PDCP layer corresponding to the second core network; updating, by the terminal device, a protocol version of the PDCP layer corresponding to the first core network to a protocol version of the PDCP layer corresponding to the second core network; updating, by the terminal device, configuration of a radio resource control (RRC) layer corresponding to the first core network to configuration of an RRC layer corresponding to the second core network; and switching, by the terminal device, a non-access stratum (NAS) entity from a first NAS entity supporting the first core network to a second NAS entity supporting the second core network.

In combination with the first aspect, in some implementations of the first aspect, the method further includes:
maintaining, by the terminal device, the configuration of a radio link control (RLC) layer, a media access control (MAC) layer, and a physical (PHY) layer unchanged.

In combination with the first aspect, in some implementations of the first aspect, if the first core network is a core network of a long term evolution (LTE) system and the second core network is a core network of a new wireless (NR) system, updating the protocol version of the PDCP layer corresponding to the first core network to the protocol version of the PDCP layer corresponding to the second core network includes:
updating, by the terminal device, LTE PDCP to NR PDCP, wherein the LTE PDCP is a protocol version of the PDCP layer corresponding to the first core network, and the NR PDCP is a protocol version of the PDCP layer corresponding to the second core network.

In combination with the first aspect, in some implementations of the first aspect, if the first core network is a core network of the LTE system and the second core network is a core network of the NR system, updating the configuration of the RRC layer corresponding to the first core network to the configuration of the RRC layer corresponding to the second core network includes:
newly adding, by the terminal device, configuration of a service data adaptation protocol (SDAP) layer, and newly adding configuration of a user plane (UP) function, based on the configuration of the RRC layer corresponding to the first core network.

In combination with the first aspect, in some implementations of the first aspect, if the first core network is a core network of an NR system and the second core network is a core network of an LTE system, updating the protocol version of the PDCP layer corresponding to the first core network to the protocol version of the PDCP layer corresponding to the second core network includes:
updating, by the terminal device, NR PDCP to LTE PDCP, wherein the NR PDCP is a protocol version of the PDCP layer corresponding to the first core network, and the LTE PDCP is a protocol version of the PDCP layer corresponding to the second core network.

In combination with the first aspect, in some implementations of the first aspect, if the first core network is the core network of then NR system and the second core network is the core network of the LTE system, updating the configuration of the RRC layer corresponding to the first core network to the configuration of the RRC layer corresponding to the second core network includes:
deleting, by the terminal device, configuration of an SDAP layer and configuration of a user plane (UP) function, based on the configuration of the RRC layer corresponding to the first core network.

In combination with the first aspect, in some implementations of the first aspect, configuring, by the terminal device, the protocol layer according to the core network type of the first core network and the core network type of the second core network, includes:
If the first core network and the second core network are core networks of a same type, maintaining, by the terminal device, the protocol version of the PDCP layer and the protocol version of the RRC layer of the terminal device unchanged.

In combination with the first aspect, in some implementations of the first aspect, configuring, by the terminal device, the protocol layer according to the core network type of the first core network and the core network type of the second core network, includes:
updating configuration of the PDCP layer corresponding to the first core network to configuration of the PDCP layer corresponding to the second core network, and/or updating configuration of the RRC layer corresponding to the first core network to configuration of the RRC layer corresponding to the second core network.

In combination with the first aspect, in some implementations of the first aspect, the method further includes:
sending, by the terminal device, a request message to an access network device, wherein the request message is used for requesting to acquire the configuration of the PDCP layer and the protocol version of the PDCP layer corresponding to the second core network.

In combination with the first aspect, in some implementations of the first aspect, the method further includes:
sending, by the terminal device, an NAS message to the second core network, wherein the NAS message is used for triggering the second core network to initiate a protocol data unit (PDU) session establishment process.

In a second aspect, a terminal device is provided. The terminal device is used for performing the method in the first aspect or any possible implementation of the above first aspect. Specifically, the terminal device includes units used for performing the method in the first aspect or any possible implementation of the above first aspect.

### Brief Description of Drawings

FIG. 1 is a schematic diagram of a communication system according to an implementation of the present disclosure.
FIG. 2 is a schematic flow chart of a network handover method according to an implementation of the present disclosure.
FIG. 3 is a schematic flow chart of a network handover method according to another implementation of the present disclosure.
FIG. 4 is a schematic diagram of interaction in a network handover method according to according to yet another implementation of the present disclosure.
FIG. 5 is a schematic diagram of interaction in a network handover method according to according to yet another implementation of the present disclosure.
FIG. 6 is a block diagram of a terminal device according to an implementation of the present disclosure.
FIG. 7 is a block diagram of a network device according to an implementation of the present disclosure.
FIG. 8 is a block diagram of a terminal device according to another implementation of the present disclosure.
Fig. 9 is a block diagram of a network device according to another implementation of the present disclosure.

### Detailed Description

The technical solutions in implementations of the present disclosure will be described in the following with reference to drawings in implementations of the present disclosure.

It should be understood that, the terms "system" and "network" are often used interchangeably in this document. The term "and/or" in this document is merely an association relationship describing associated objects, indicating that there may be three relationships, for example, a and/or b may indicate three situations: a alone, a and b, or b alone. In addition, the symbol "/" in this document generally indicates that objects before and after the symbol "/" have an "or" relationship.

The technical solutions of implementations of the present disclosure may be applied to various communication systems, such as a Long Term Evolution (LTE) system, an LTE Frequency Division Duplex (FDD) system, an LTE Time Division Duplex (TDD), and a future 5G system.

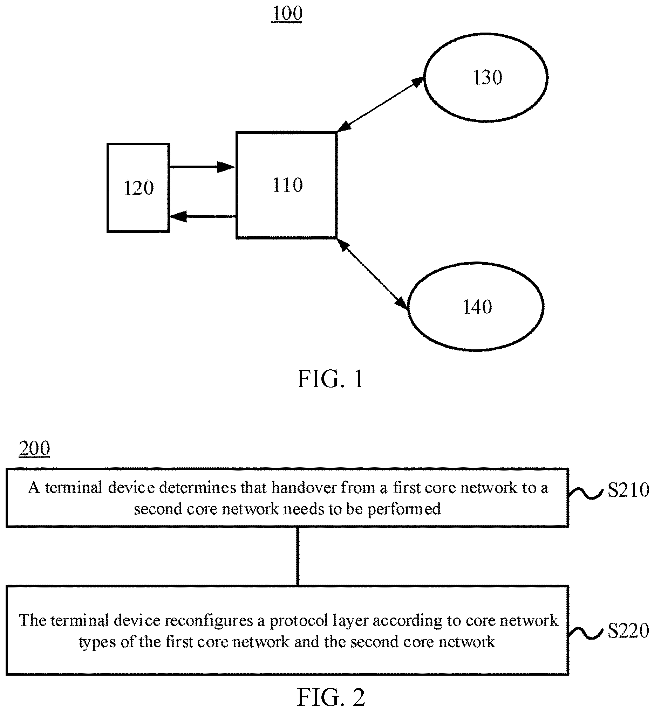

FIG. 1 shows a wireless communication system 100 applied in an implementation of the present disclosure. The wireless communication system 100 may include an access network device 110. The access network device 110 may be a device that communicates with a terminal device. The access network device 110 may provide communication coverage for a specific geographic area and may communicate with terminal devices (e.g., UE) located within the coverage area. Optionally, the access network device 110 may be an evolutional Node B (eNB or eNodeB) in an LTE system or a radio controller in a Cloud Radio Access Network (CRAN). The network device may be a relay station, an access point, an on-board device, a wearable device, a network-side device in a future 5G network, or a network device in a future evolved Public Land Mobile Network (PLMN), etc.

The wireless communication system 100 also includes at least one terminal device 120 located within the coverage area of the access network device 110. The terminal device 120 may be mobile or fixed. Optionally, the terminal device 120 may be referred to as an access terminal, User Equipment (UE), a subscriber unit, a subscriber station, a mobile station, a rover station, a remote station, a remote terminal, a mobile device, a user terminal, a terminal, a wireless communication device, a user agent, or a user device. The access terminal may be a cellular phone, a cordless phone, a session initiation protocol (SIP) phone, a wireless local loop (WLL) station, a personal digital assistant (PDA), a handheld device with a wireless communication function, a computing device or other processing device connected to a wireless modem, an on-board device, a wearable device, a terminal device in a future 5G network, or a terminal device in a future evolved public land mobile network (PLMN), etc.

The communication system 100 may include at least two core network devices, for example, a core network device 130 and a core network device 140 shown in FIG.1. The core network device 130 and the core network device 140 may be core networks of a same type or core networks of different types. For example, the core network device 130 is a core network device of an LTE system, e.g., EPC, and the core network device 140 may be a core network device of a 5G system, etc.

It should be noted that, in an implementation of the present disclosure, different core networks may share an access network device, that is, the access network device may communicate with core network devices of different networks.

Optionally, in implementations of the present disclosure, the 5G system or network may also be referred to as a New Radio (NR) system or network.

As mentioned above, in some cases, the terminal device needs to perform handover from a source core network to a target core network. The source core network and the target core network may be core networks of a same type or core networks of different types. For example, the source core network is an EPC and the target core network is a core network of the 5G system (5GC). When handover from the EPC to the 5GC needs to be performed, in the prior art, the terminal device will firstly release a Protocol Data Unit (PDU) connection with the EPC and a source cell, and then establish a PDU session with the 5GC and the target cell. However, if the serving cell does not change before and after the handover is performed, additional signaling overhead may be caused since the terminal device releases an old RRC connection, and establishes a new RRC.

In view of this, a network handover method is provided in an implementation of the present disclosure, by which signaling overhead can be reduced during the network handover.

FIG. 2 schematically shows a schematic flow chart of a network handover method 200 provided by an implementation of the present disclosure. The method 200 may be applied to the wireless communication system 100 described above, but implementations of the present disclosure are not limited thereto.

As shown in FIG. 2, the method 200 includes the following contents.

In S210, a terminal device determines that handover from a first core network to a second core network needs to be performed.

It should be noted that, in an implementation of the present disclosure, the first core network (i.e., source core network) and the second core network (i.e., target core network) share an access network device, that is, the access network device may communicate with core network devices of the first core network and the second core network, or it may be determined that, the access network to which the terminal device is accessed does not change (or, a serving cell does not change) before and after the terminal device performs the handover.

Optionally, in an implementation of the present disclosure, the first core network and the second core network may be core networks of a same type, or may be core networks of different types. For example, the first core network is a core network of an LTE system, i.e., EPC, the second core network is a core network of a 5G system, or the first core network is a core network of the 5G system, the second core network is the EPC, etc., and this is not restricted in implementations of the present disclosure.

Optionally, determining, by the terminal device, that the handover from the first core network to the second core network needs to be performed, may refer to as that the terminal device makes the determination by itself, or makes the determination based on a trigger instruction of the network device. Here, the network device may be a core network device, or may be an access network device, and the trigger instruction may be an S1 signaling, an N2/N3 signaling, an RRC signaling, etc., and this is not restricted in implementations of the present disclosure.

Optionally, as an implementation, S210 may include: the terminal device determines that the handover from the first core network to the second core network needs to be performed according to a current service requirement.

Specifically, when the first core network to which the terminal device currently accessed does not support the current service requirement, the terminal device may determine that, the handover to the second core network supporting the current service requirement needs to be performed. For example, the first core network to which the terminal device is currently accessed is the 5GC, and when the terminal device wants to transmit services that are not supported by the 5GC, such as a Multimedia Broadcast and Multicast Service (MBMS), a Vehicle to Vehicle (V2V) service, or a Vehicle to Everything (V2X) service, the terminal device determines that the handover to EPC needs to be performed, to support the current service requirement of the terminal device. Or, the handover of the terminal device based on the service requirement may occur in core networks of a same type, for example, the first core network is the 5GC and the second core network is also the 5GC, but service types supported by the two core networks are different. If the first core network does not support a first service that the terminal device currently wants to access, and the second core network supports the first service, the terminal device may determine that the handover from the first core network to the second core network needs to be performed.

Optionally, in some implementations, if core network types of the first core network and the second core network are different, the method 200 further includes: the terminal device acquires system information of the second core network.

Optionally, the terminal device may receive a broadcast message sent by an access network device and acquires the system information of the second core network from the broadcast message. Or, the terminal device requests to acquire the system information of the second core network by sending an RRC signaling to the access network device. The terminal device may acquire a protocol version of a protocol layer (e.g., a protocol version of a PDCP layer, etc.) and configuration information of an RRC layer corresponding to the second core network according to the system information of the second core network.

In other words, the system information of the second core network may be carried in the broadcast message sent by the access network device, and the terminal device may acquire the system information of the second core network by receiving the broadcast message, or the terminal device may acquire the system information of the second core network by sending the RRC signaling to the access network device.

Optionally, the terminal device may acquire information of a service type supported by the second core network according to the broadcast message sent by the access network device, such that the terminal device decides to perform handover to which core network the handover.

Optionally, as another implementation, S210 may include:
When the terminal device has received a trigger instruction from the network device, the terminal device determines that the handover from the first core network to the second core network needs to be performed. The trigger instruction is used for notifying the terminal device to perform the handover from the first core network to the second core network.

That is, the terminal device may perform the network handover based on the trigger instruction of the network device, and the trigger instruction may be used for instructing the terminal device to perform the handover from the first core network to the second core network. Optionally, the trigger instruction may be an S1 signaling, an N2/N3 signaling, an RRC signaling, etc., that is, the terminal device may determine that the handover from the first core network to the second core network needs to be performed according to the trigger instruction, such as the S1 signaling, the N2/N3 signaling, or the RRC signaling, and performs relevant configuration of the protocol layer.

Optionally, the trigger instruction of the network device may be sent based on a specific redirection strategy. For example, the network device is a core network device, and the core network device may determine that the terminal device needs to perform handover from the first core network to the first core network based on load information of the core network side. Optionally, if the network device is an access network device, the access network device may determine that the terminal device needs to perform the handover from the first core network to the first core network based on load information of the access network side.

In S220, the terminal device configures a protocol layer according to core network types of the first core network and the second core network.

Optionally, the terminal device may perform relevant configuration of the protocol layer according to whether the core network types of the first core network and the second core network are the same. For example, if the core network types of the first core network and the second core network are the same, that is, before and after the handover is performed, the access network does not change (or a serving cell does not change) and the core network type does not change. In this case, the terminal device does not need to reconfigure a Radio Link Control (RLC) layer, a Media Access Control (MAC) layer, or a Physical (PHY) Layer, while the terminal device does not need to update the protocol versions of the Packet Data Convergence Protocol (PDCP) layer or the Radio Resource Control (RRC) layer. Optionally, the terminal device may need to update some configuration information of the PDCP layer or the RRC layer, such as secret keys.

Optionally, if the core network types of the first core network and the second core network are different, that is, before and after the handover is performed, the access network does not change (or the serving cell does not change), but the core network type changes, then the terminal device needs to update a non-access stratum (NAS) entity, and may trigger an interaction between the layers. For example, the NAS layer needs to notify the RRC layer to reconfigure the configuration of the PDCP layer, and add or delete some configuration of the RRC layer to support a new core network type. Detailed description will be set forth in the following in combination with specific examples.

Optionally, in a specific implementation, S220 may include:
If the first core network and the second core network are core networks of different types, the terminal device updates configuration of a packet data convergence protocol (PDCP) layer corresponding to the first core network to configuration of a PDCP layer corresponding to the second core network, updates a protocol version of the PDCP layer corresponding to the first core network to a protocol version of the PDCP layer corresponding to the second core network, updates configuration of an RRC layer corresponding to the first core network to configuration of an RRC layer corresponding to the second core network, and switches an NAS entity from a first NAS entity supporting the first core network to a second NAS entity supporting the second core network.

Specifically, if the core network types are different before and after the handover is performed, that is, the core network types of the first core network and the second core network are different, the terminal device does not need to update the configuration of the RLC layer, the MAC layer, or the PHY layer, but only needs to update some aspects in following.

In a first aspect, the terminal device needs to switch the NAS entity from the first NAS entity corresponding to the first core network to the second NAS entity corresponding to the second core network. For example, if the first core network is a core network of an LTE system, the second core network is a core network of a 5G system, the terminal device needs to switch an EPC NAS entity to a 5GC NAS entity. Or, if the first core network is a core network of the 5G system and the second core network is a core network of the LTE system, the terminal device needs to switch the 5GC NAS entity to the EPC NAS entity.

In a second aspect, the terminal device needs to update the protocol version of the PDCP, that is, updating the protocol version of the PDCP layer corresponding to the first core network to the protocol version of the PDCP layer corresponding to the second core network. For example, if the first core network is a core network of the LTE system and the second core network is a core network of the NR system, the terminal device may update LTE PDCP to NR PDCP, wherein the LTE PDCP is a protocol version of the PDCP layer corresponding to the first core network and the NR PDCP is a protocol version of the PDCP layer corresponding to the second core network. Or, if the first core network is a core network of the NR system, the second core network is a core network of the LTE system, and the terminal device updates the NR PDCP to the LTE PDCP, wherein the NR PDCP is the protocol version of the PDCP layer corresponding to the first core network, and the LTE PDCP is the protocol version of the PDCP layer corresponding to the second core network.

In a third aspect, the terminal device needs to reconfigure the PDCP layer, so that the updated configuration of the PDCP layer can be adapted to the second core network.

Optionally, if functions of the configuration of the RRC layer are different before and after the handover is performed, the terminal device may update the configuration of the RRC layer. For example, if the first core network is a core network of a LTE system, the second core network is a core network of an NR system, the configuration of the RRC layer of the NR system supports a Service Data Adaptation Layer (SDAP) function and a User Plane (UP) function , therefore, when the handover from the core network of the LTE system to the core network of the 5G system is performed, the terminal device needs to newly add configuration of the SDAP layer and configuration of the UP function. Conversely, when the handover from the core network of the NR system to the core network of the LTE system is performed, the terminal device needs to delete the configuration of the SDAP layer and the configuration of the UP function.

Therefore, in the network handover method of an implementation of the present disclosure, under the condition that, before and after the terminal device performs the handover, the access network of the terminal device does not change and the core network type changes, the terminal device may only need to reconfigure the PDCP layer and the RRC layer without reconfiguring the RLC layer, MAC layer and PHY layer. Under the condition that, before and after the terminal device performs the handover, the access network of the terminal device does not change and the core network type does not change, the terminal device may not need to update the protocol versions of the PDCP layer or the RRC, and may not need to reconfigure the RLC layer, the MAC layer, or the PHY layer, which is beneficial to reducing the signaling overhead of the terminal device during the network handover.

Optionally, in some implementations, the method 200 further includes:
The terminal device sends an NAS message to the second core network, and the NAS message is used for triggering the second core network to initiate a protocol data unit (PDU) session establishment process.

Specifically, after the reconfiguration of the RRC layer is accomplished, the terminal device may send the NAS message to the second core network to trigger the second core network to initiate the PDU session establishment process or a PDU connection establishment process.

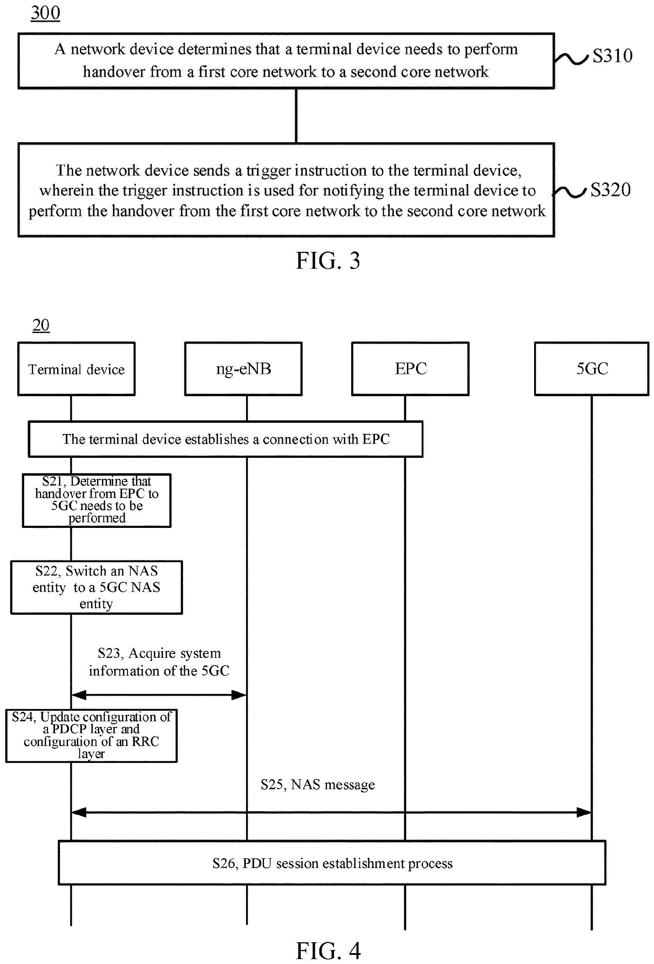

The network handover method according to an implementation of the present disclosure is described in detail from the perspective of a terminal device above in combination with FIG. 2, and a network handover method according to another implementation of the present disclosure is described in detail from the perspective of a network device below in combination with FIG.3. It should be understood that the description on the network device side corresponds to the description on the terminal device side, and similar descriptions can refer to the above description, which will not be repeated here to avoid repetition.

FIG. 3 is a schematic flow chart of a network handover method 300 according to another implementation of the present disclosure. The network handover method 300 may be performed by an access network device or a core network device in the communication system shown in FIG. 1. As shown in FIG. 3, the method 300 includes following contents.

In S310, a network device determines that a terminal device needs to perform handover from a first core network to a second core network.

In S320, the network device sends a trigger instruction to the terminal device, wherein the trigger instruction is used for notifying the terminal device to perform the handover from the first core network to the second core network.

Optionally, in some implementations, determining, by the network device, that the terminal device needs to perform the handover from the first core network to the second core network, includes: the network device determines that the terminal device needs to perform the handover from the first core network to the second core network according to a current load condition.

For example, the network device is a core network device of a first core network, and the network device may determine that the terminal device needs to be perform the handover from the first core network to the second core network when the load of the first core network is heavy. Or, the network device is an access network device, and the access network device may determine that the terminal device needs to be perform the handover from the first core network to the second core network when the load of the first core network is heavy. Optionally, the access network device may acquire the load condition of the core network to which the connection is established, so that the access network device instructs the terminal device to perform the network handover according to the load condition of the core network.

Optionally, in some implementations, the network device is an access network device or a core network device.

Optionally, in some implementations, the trigger instruction is an S1 signaling, an N2/N3 signaling, or a radio resource control (RRC) signaling.

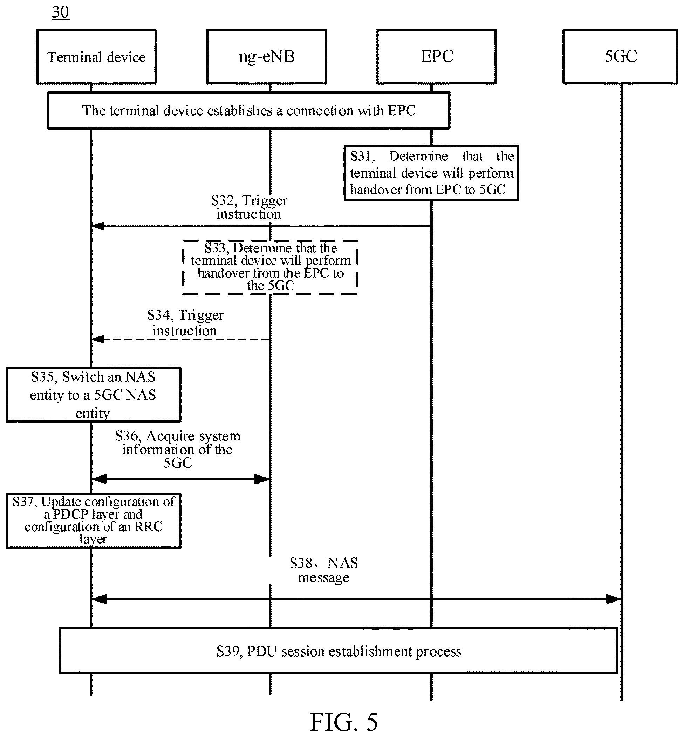

The method implementations of the present disclosure are described in detail above from the perspective of terminal device and network device respectively with reference to FIGs. 2 to 3. Network handover methods according to implementations of the present disclosure are described below with reference to FIGs. 4 and 5 from the perspective of device interaction.

It should be understood that FIG. 4 and FIG. 5 illustrate implementations of the present disclosure by taking handover from a core network of an LTE system (i.e. EPC) to a core network of a 5G system (i.e. 5GC) as an example, but implementations of the present disclosure are not limited thereto.

In the implementation, a core network currently establishing connection with the terminal device is EPC, i.e. the source core network is the first core network, which is the EPC, and the target core network, i.e. the second core network is 5GC, i.e. the core network type changes before and after the handover is performed, wherein ng-eNB is an access network device shared by the EPC and the 5GC.

The difference between FIG. 4 and FIG. 5 is that, in FIG. 4, the terminal device performs the network handover which is triggered by the terminal device, in FIG. 5, the terminal device performs the network handover which is triggered by the network device, and the network device may be a core network device or an access network device.

As shown in FIG. 4, a method 20 may include the following contents.

In S21, a terminal device determines that handover from a first core network to a second core network needs to be performed.

Optionally, the terminal device may determine that the handover from the first core network to the second core network needs to be performed according to a factor such as a service requirement of the terminal device.

After the terminal device determines that the handover from the first core network to the second core network needs to be performed, further, in S22, the terminal device switches an NAS entity from an EPC NAS entity to a 5GC NAS entity .

Further, the terminal device may reconfigure a PDCP layer and an RRC layer. Before reconfiguring the PDCP layer and RRC layer, in S23, the terminal device acquires system information of a 5GC. Specifically, the terminal device may acquire the system information of the 5GC from an access network device by receiving a broadcast message or sending an RRC signaling.

The system information of the 5GC includes a protocol version of the PDCP layer and relevant configuration information of the RRC layer. The protocol version of the PDCP layer is a protocol version of the PDCP layer corresponding to the 5GC.

Optionally, the process of performing S23 may be before S21 or may be after S21, and this is not restricted in implementations of the present disclosure. In a word, before the PDCP layer and the RRC layer is reconfigured, the above information needs to be acquired firstly.

Further, in S24, the terminal device updates the protocol version and configuration of the PDCP layer, and newly adds configuration of an SDAP layer and configuration of a UP function (e.g., integrity protection) and the like in the RRC layer.

After accomplishing the configuration the RRC layer, in S25, the terminal device may send an NAS message to the 5GC to trigger the 5GC to initiate a PDU session establishment process.

Further, in S26, a PDU session between the terminal device, ng-eNB and 5GC is established.

As shown in FIG. 5, a method 30 may include the following contents.

In an implementation, the terminal device performs network handover based on a trigger instruction of a network device.

In S31, an EPC determines that the terminal device needs to perform handover from a first core network to a second core network.

Optionally, the EPC device may determine that the terminal device needs to perform the handover from the first core network to the second core network according to load information of the EPC device itself.

Further, in S32, the EPC sends a trigger instruction to the terminal device to instruct the terminal device to perform the handover from the first core network to the second core network.

Optionally, the trigger instruction is a signaling or a message used for communication between the terminal device and the core network, such as an S1 signaling or an N2/N3 signaling.

Optionally, the terminal device performs the network handover based on the trigger of the access network device. Specifically, in S33, the ng-eNB determines that the terminal device needs to perform the handover from the first core network to the second core network. For example, the ng-eNB may determine that the terminal device needs to perform the handover from the first core network to the second core network according to load information of the ng-eNB itself.

Further, in S34, the ng-eNB sends a trigger instruction to the terminal device to instruct the terminal device to perform the handover from the first core network to the second core network. Optionally, the trigger instruction may be a signaling or a message used for communication between the terminal device and the access network device, such as an RRC signaling, and this is not restricted in implementations of the present disclosure.

After receiving the trigger instruction of the EPC or the ng-eNB, the terminal device determines that the handover from the first core network to the second core network needs to be performed. Further, in S35, the terminal device switches an NAS entity from an EPC NAS entity to a 5GC NAS entity.

Further, the terminal device may reconfigure a PDCP layer and an RRC layer. Before reconfiguring the PDCP layer and RRC layer, in S36, the terminal device acquires system information of the 5GC. Specifically, the terminal device may acquire the system information of the 5GC from the access network device by receiving a broadcast message or sending an RRC signaling.

The system information of the 5GC includes a protocol version of the PDCP layer and relevant configuration information of the RRC layer. Here, the protocol version of the PDCP layer is a protocol version of the PDCP layer corresponding to the 5GC.

Optionally, the process for performing S36 may be before S31 to S34, or may be after S31 to S34, and this is not restricted in implementations of the present disclosure. In a word, before the PDCP layer and the RRC layer is reconfigured, the above system information needs to be acquired firstly.

Further, in S37, the terminal device updates the protocol version and configuration of the PDCP layer, and newly adds configuration of an SDAP layer and configuration of a UP function (e.g., integrity protection) and the like in the RRC layer.

After completing to configure the RRC layer, in S38, the terminal device may send an NAS message to the 5GC to trigger the 5GC to initiate a PDU session establishment process.

Further, in S39, a PDU session between the terminal device, ng-eNB and 5GC is established.

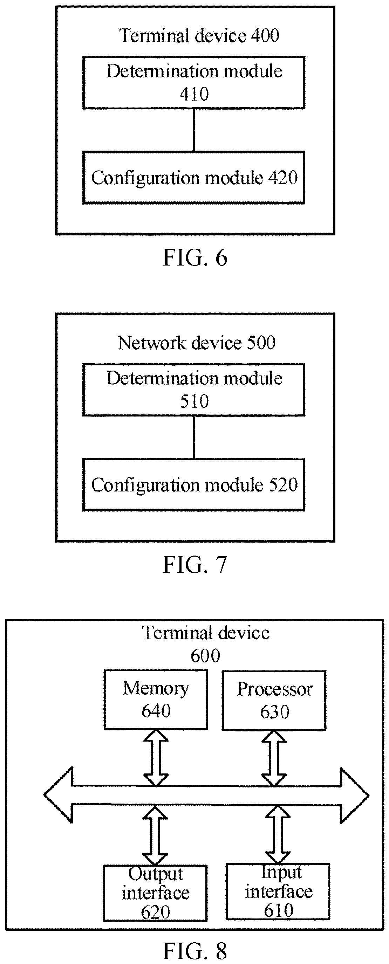

Method implementations of the present disclosure are described in detail above with reference to FIGs. 2 to 5, device implementations of the present disclosure are described in detail below with reference to FIGs. 6 to 9. It should be understood that the device implementations and the method implementations correspond to each other, and description of the method implementations may be referred to for similar description of the device implementations.

FIG. 6 shows a block diagram of a terminal device 400 according to an implementation of the present disclosure. As shown in FIG. 6, the terminal device 400 includes a determination module 410 and a configuration module 420.

The determination module 410 is used for determining that handover from a first core network to a second core network needs to be performed.

The configuration module 420 is used for configuring a protocol layer according to core network types of the first core network and the second core network.

Optionally, in some implementations, the determination module 410 is specifically used for:
determining that the handover from the first core network to the second core network needs to be performed according to a current service requirement.

Optionally, in some implementations, the determination module 410 is specifically used for:
when a trigger instruction has been received from a network device, determining that the handover from the first core network to the second core network needs to be performed, wherein the trigger instruction is used for notifying the terminal device to perform the handover from the first core network to the second core network.

Optionally, in some implementations, the terminal device 400 further includes a first receiving module._The first receiving module is used for receiving the trigger instruction sent by the network device.

Optionally, in some implementations, the network device is an access network device or a core network device.

Optionally, in some implementations, the trigger instruction is an S1 signaling, an N2/N3 signaling, or a radio resource control (RRC) signaling.

Optionally, in some implementations, if the first core network and the second core network are core networks of different types, the terminal device further includes an acquisition module. The acquisition module is used for acquiring system information of the second core network.

Optionally, in some implementations, the terminal device 400 further includes a second receiving module. The second receiving module is used for receiving a broadcast message sent by an access network device and acquiring the system information of the second core network from the broadcast message.

Optionally, in some implementations, the terminal device 400 further includes a first sending module and a third receiving module. The first sending module is used for sending a first RRC signaling to an access network device. The third receiving module is used for receiving a second RRC signaling replied by the access network device.

The acquisition module is specifically used for: acquiring system information of the second core network from the second RRC signaling.

Optionally, in some implementations, the configuration module 420 is specifically used for:
If the first core network and the second core network are core networks of different types, updating configuration of a packet data convergence protocol (PDCP) layer corresponding to the first core network to configuration of a PDCP layer corresponding to the second core network, updating a protocol version of the PDCP layer corresponding to the first core network to a protocol version of the PDCP layer corresponding to the second core network, updating configuration of an RRC layer corresponding to the first core network to configuration of an RRC layer corresponding to the second core network, and switching a non-access stratum (NAS) entity from a first NAS entity supporting the first core network to a second NAS entity supporting the second core network.

Optionally, in some implementations, the configuration module 420 is further used for: maintaining the configuration of an RLC layer, an MAC layer, and a PHY layer unchanged.

Optionally, in some implementations, if the first core network is a core network of a long term evolution (LTE) system and the second core network is a core network of a new wireless (NR) system, the configuration module 420 is specifically used for: updating LTE PDCP to NR PDCP, and the LTE PDCP is a protocol version of the PDCP layer corresponding to the first core network, and the NR PDCP is a protocol version of the PDCP layer corresponding to the second core network.

Optionally, in some implementations, if the first core network is a core network of an LTE system and the second core network is a core network of an NR system, the configuration module 420 is specifically used for: newly adding configuration of a service data adaptation protocol (SDAP) layer and newly adding configuration of a user plane (UP) function, based on the configuration of the RRC layer corresponding to the first core network.

Optionally, in some implementations, if the first core network is a core network of an NR system and the second core network is a core network of an LTE system, the configuration module 420 is specifically used for: updating NR PDCP to LTE PDCP, wherein the NR PDCP is a protocol version of the PDCP layer corresponding to the first core network, and the LTE PDCP is a protocol version of the PDCP layer corresponding to the second core network.

Optionally, in some implementations, if the first core network is a core network of an NR system and the second core network is a core network of an LTE system, the configuration module 420 is specifically used for: deleting configuration of an SDAP layer and deleting configuration of a user plane (UP) function, based on the configuration of the RRC layer corresponding to the first core network.

Optionally, in some implementations, the configuration module 420 is specifically used for: if the first core network and the second core network are core networks of the same type, maintaining the protocol versions of the PDCP layer and RRC layer of the terminal device unchanged.

Optionally, in some implementations, the configuration module 420 is specifically used for: updating configuration of the PDCP layer corresponding to the first core network to configuration of the PDCP layer corresponding to the second core network, and/or updating configuration of the RRC layer corresponding to the first core network to configuration of the RRC layer corresponding to the second core network.

Optionally, in some implementations, the terminal device 400 further includes a second sending module and a third sending module. The second sending module is used for sending a request message to an access network device, and the request message is used for requesting to acquire the configuration of a PDCP layer and the protocol version of the PDCP layer corresponding to the second core network.

Optionally, in some implementations, the terminal device 400 further includes a third sending module. The third sending module is used for sending an NAS message to the second core network, and the NAS message is used for triggering the second core network to initiate a PDU session establishment process.

It should be understood that, the terminal device 400 in an implementation of the present disclosure may correspond to the terminal device in the method implementation of the present disclosure, and the above operations and other operations and/or functions of each unit in the terminal device 400 are respectively for implementing the corresponding flow of the terminal device in the method 200 shown in FIG. 2, or the method 20 shown in FIG.4, or the method 30 shown in FIG.5, and will not be repeated here for brevity.

FIG.7 shows a block diagram of a network device 500 according to an implementation of the present disclosure. As shown in FIG. 7, the terminal device 500 includes a determination module 510 and a communication module 520.

The determination module 510 is used for determining that the terminal device needs to perform handover from a first core network to a second core network.

The communication module 520 is used for sending a trigger instruction to the terminal device, wherein the trigger instruction is used for notifying the terminal device to perform the handover from the first core network to the second core network.

Optionally, in some implementations, the determination module 510 is specifically used for:
determining that the terminal device needs to perform the handover from the first core network to the second core network according to a current load condition.

Optionally, in some implementations, the network device is an access network device or a core network device.

Optionally, in some implementations, the trigger instruction is an S1 signaling, an N2/N3 signaling, or a radio resource control (RRC) signaling.

It should be understood that, the network device 500 in an implementation of the present disclosure may correspond to the access network device in the method implementation of the present disclosure, and the above operations and other operations and/or functions of each unit in the network device 500 are respectively for implementing the corresponding flow of the network device in the method 300 shown in FIG. 3, or the method 20 shown in FIG.4, or the method 30 shown in FIG.5, and will not be repeated here for brevity.

As shown in FIG. 8, an implementation of the present disclosure provides a terminal device 600. The terminal device 600 may be the terminal device 400 in FIG. 6, and can be used to perform the contents for the terminal device corresponding to the method 200 in FIG. 2, the method 20 in FIG. 4, or the method 30 in FIG. 5. The terminal device 600 includes an input interface 610, an output interface 620, a processor 630, and a memory 640. The input interface 610, the output interface 620, the processor 630, and the memory 640 may be connected through a bus system. The memory 640 is used for storing programs, instructions or codes. The processor 630 is used for executing the programs, the instructions or the codes in the memory 640 to control the input interface 610 to receive signals, control the output interface 620 to send signals, and accomplish operations in the foregoing method implementations.

It should be understood that, in an implementation of the present disclosure, the processor 630 may be a central processing unit (CPU), or the processor 630 may be other general purpose processor, a digital signal processor (DSP), an application specific integrated circuit (ASIC), an off-the-shelf programmable gate array (FPGA) or other programmable logic device, a discrete gate or a transistor logic device, or a discrete hardware component, etc. The general purpose processor may be a microprocessor or the processor may be any conventional processor or the like.

The memory 640 may include a read-only memory and a random access memory, and provide instructions and data to the processor 630. A portion of memory 640 may also include a non-volatile random access memory. For example, the memory 640 may also store device type information.

In the implementation process, various contents of the methods described above may be accomplished by integrated logic circuits of hardware in the processor 630 or instructions in the form of software. The contents of the method disclosed in connection with an implementation of the present disclosure can be directly embodied by the execution of the hardware processor or by the execution of the combination of hardware and software modules in the processor. The software modules may be located in a storage medium commonly used in the art, such as a random access memory, flash memory, read-only memory, programmable read-only memory or electrically erasable programmable memory, or register. The storage medium is located in the memory 640, and the processor 630 reads the information in the memory 640, and accomplishes the contents of the above method in combination with its hardware. In order to avoid repetition, it will not be described in detail here.

In a specific implementation, the first receiving module, the second receiving module, the third receiving module, the first sending module, the second sending module and the third sending module in the terminal device 400 shown in FIG.6 may be implemented by the input interface 610 and the output interface 620 shown in FIG. 8, and the determination module 410, the configuration module 420 and the acquisition module in the terminal device 400 shown in FIG.6 may be implemented by the processor 630 shown in FIG. 8.

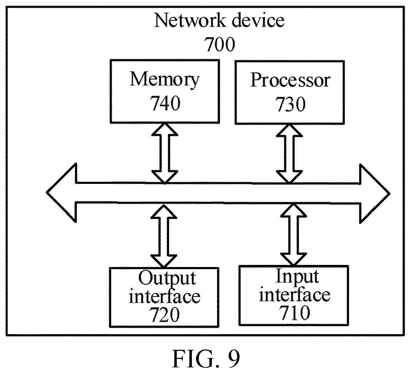

As shown in FIG. 9, an implementation of the present disclosure provides a network device 700. The network device 700 may be the network device 500 in FIG. 7, and can be used for perform the contents for the network device corresponding to the method 300 in FIG. 3, the method 20 in FIG. 4, or the method 30 in FIG. 5. The network device 700 includes an input interface 710, an output interface 720, a processor 730, and a memory 740. The input interface 710, the output interface 720, the processor 730, and the memory 740 may be connected through a bus system. The memory 740 is used for storing programs, instructions or codes. The processor 730 is used for executing the programs, the instructions or the codes in the memory 740 to control the input interface 710 to receive signals, control the output interface 720 to send signals, and accomplish operations in the foregoing method implementations.

It should be understood that, in an implementation of the present disclosure, the processor 730 may be a central processing unit (CPU), or the processor 730 may be other general purpose processor, a digital signal processor (DSP), an application specific integrated circuit (ASIC), an off-the-shelf programmable gate array(FPGA) or other programmable logic device, a discrete gate or a transistor logic device, or a discrete hardware component, etc. The general purpose processor may be a microprocessor or the processor may be any conventional processor or the like.

The memory 740 may include a read-only memory and a random access memory, and provide instructions and data to the processor 730. A portion of memory 740 may also include a non-volatile random access memory. For example, the memory 740 may also store device type information.

In the implementation process, various contents of the methods described above may be accomplished by integrated logic circuits of hardware in the processor 730 or instructions in the form of software. The contents of the method disclosed in connection with an implementation of the present disclosure can be directly embodied by the execution of the hardware processor or by the execution of the combination of hardware and software modules in the processor. The software modules may be located in a storage medium commonly used in the art, such as a random access memory, flash memory, read-only memory, programmable read-only memory or electrically erasable programmable memory, or register. The storage medium is located in the memory 740, and the processor 730 reads the information in the memory 740, and accomplishes the contents of the above method in combination with its hardware. In order to avoid repetition, it will not be described in detail here.

In a specific implementation, the communication module 520 in the network device 500 shown in FIG.7 may be implemented by the input interface 710 and the output interface 720 of FIG. 9, and the determination module 510 in the network device 500 may be implemented by the processor 730 of FIG. 9.

An implementation of the present disclosure provides a computer readable storage medium, the computer readable storage medium stores one or more programs including instructions which, when executed by a portable electronic device including multiple application programs, enable the portable electronic device to perform the methods of the implementations shown in FIGs. 2 to 5.

The implementation of the application provides a computer program, which includes instructions which, when executed by a computer, enable the computer to execute the corresponding flows of the methods of the implementations shown in FIGs. 2 to 5.

The term "and/or" in this document is merely a description of the association relationship between associated objects, indicating that there may be three kinds of relationships, and for example, A and/or B may represent that A exists alone, A and B exist at the same time, or B exists alone. In addition, the symbol "/" herein generally indicates that objects before and after the symbol are in an "or" relationship.

It should be understood that in various implementations of the present disclosure, values of sequence numbers in the above-mentioned process do not imply an order of execution, and an order of execution of each process should be determined by its function and internal logic, and should not constitute any limitation on an implementation process of the implementation of the present disclosure.

Those of ordinary skill in the art will recognize that the exemplary elements and algorithm acts described in connection with the implementations disclosed herein can be implemented in electronic hardware, or a combination of computer software and electronic hardware. Whether these functions are performed in hardware or software depends on the specific application and design constraints of the technical solution. Skilled in the art may use different methods to implement the described functions for each particular application, but such implementation should not be considered to be beyond the scope of the present disclosure.

Those skilled in the art can clearly understand that for convenience and conciseness of description, corresponding processes in the aforementioned method implementations may be referred to for the specific working processes of the system, device, and unit described above, which are not repeated here.

In several implementations provided by the present disclosure, it should be understood that the disclosed system, apparatus and method may be implemented in other ways. For example, the apparatus implementations described above are only illustrative, for example, the division of the units is only a logical function division, and there may be other division manners in actual implementation. For example, multiple units or components may be combined or integrated into another system, or some features may be ignored or not executed. On the other hand, the mutual coupling or direct coupling or communication connection shown or discussed may be indirect coupling or communication connection through some interface, apparatus or unit, and may be electrical, mechanical or in other forms.

The unit described as a separate component may or may not be physically separated, and the component shown as a unit may or may not be a physical unit, i.e., it may be located in one place or may be distributed over multiple network units. Some or all of the units may be selected according to practical needs to achieve a purpose of the implementations.

In addition, various functional units in various implementations of the present disclosure may be integrated in one processing unit, or various units may be physically present separately, or two or more units may be integrated in one unit.

The functions may be stored in a computer readable storage medium if implemented in a form of software functional units and sold or used as a separate product. Based on this understanding, the technical solution of the present disclosure, or the part contributing to the related art, or the part of the technical solution, may be embodied in the form of a software product stored in a storage medium, including several instructions for causing a computer device (which may be a personal computer, a server, or a network device, etc.) to perform all or part of the acts of the methods described in various implementations of the present disclosure. The aforementioned storage media include U disk, mobile hard disk, read-only memory (ROM), random access memory (RAM), magnetic disk or optical disk, and other media capable of storing program codes.

The foregoing are merely exemplary implementations of the present disclosure, but the protection scope of the present disclosure is not limited thereto. Any person skilled in the art can easily conceive changes within the technical scope disclosed by the present disclosure, which should be included within the protection scope of the present disclosure. Therefore, the protection scope of the present disclosure should be subject to the protection scope of the claims.

## Claims

1. A network handover method comprising:
determining, by a terminal device, that handover from a first core network to a second core network needs to be performed (210); and
configuring, by the terminal device, a protocol layer according to core network types of the first core network and the second core network (220);
**characterized in that** the configuring, by the terminal device, the protocol layer according to the core network types of the first core network and the second core network (220), comprises:
when the first core network and the second core network are core networks of different types, updating, by the terminal device, configuration of a packet data convergence protocol, PDCP, layer corresponding to the first core network to configuration of a PDCP layer corresponding to the second core network; updating, by the terminal device, a protocol version of the PDCP layer corresponding to the first core network to a protocol version of the PDCP layer corresponding to the second core network; updating, by the terminal device, configuration of a radio resource control, RRC, layer corresponding to the first core network to configuration of an RRC layer corresponding to the second core network; and switching, by the terminal device, a non-access stratum, NAS, entity from a first NAS entity supporting the first core network to a second NAS entity supporting the second core network; and
maintaining, by the terminal device, the configuration of a radio link control, RLC, layer, a media access control, MAC, layer, and a physical, PHY, layer unchanged.

2. The method of claim 1, wherein determining, by the terminal device, that the handover from the first core network to the second core network needs to be performed (210), comprises:
determining, by the terminal device, that the handover from the first core network to the second core network needs to be performed according to a current service requirement,
or,
when the terminal device has received a trigger instruction from a network device, determining, by the terminal device, that the handover from the first core network to the second core network needs to be performed, wherein the trigger instruction is used for notifying the terminal device to perform the handover from the first core network to the second core network.

3. The method of claim 1, wherein
when the first core network is a core network of a long term evolution, LTE, system, the second core network is a core network of a new wireless, NR, system, updating the protocol version of the PDCP layer corresponding to the first core network to the protocol version of the PDCP layer corresponding to the second core network, comprises:
updating, by the terminal device, LTE PDCP to NR PDCP, wherein the LTE PDCP is a protocol version of the PDCP layer corresponding to the first core network, and the NR PDCP is a protocol version of the PDCP layer corresponding to the second core network,
wherein when the first core network is a core network of an LTE system, the second core network is a core network of an NR system, updating the configuration the RRC layer corresponding to the first core network to the configuration of the RRC layer corresponding to the second core network, comprises:
newly adding, by the terminal device, configuration of a service data adaptation protocol, SDAP, layer, and newly adding configuration of a user plane, UP, function, based on the configuration of the RRC layer corresponding to the first core network.

4. The method of claim 1, wherein when the first core network is a core network of an NR system and the second core network is a core network of an LTE system, updating the protocol version of the PDCP layer corresponding to the first core network to the protocol version of the PDCP layer corresponding to the second core network, comprises:
updating, by the terminal device, NR PDCP to LTE PDCP, wherein the NR PDCP is a protocol version of the PDCP layer corresponding to the first core network, and the LTE PDCP is a protocol version of the PDCP layer corresponding to the second core network,
wherein when the first core network is the core network of the NR system and the second core network is the core network of the LTE system, updating the configuration of the RRC layer corresponding to the first core network to the configuration of the RRC layer corresponding to the second core network, comprises:
deleting, by the terminal device, configuration of a service data adaptation protocol, SDAP, layer and configuration of a user plane, UP, function, based on the configuration of the RRC layer corresponding to the first core network.

5. The method of claim 1 or 2, wherein configuring, by the terminal device, the protocol layer according to the core network types of the first core network and the second core network (220), comprises:
when the first core network and the second core network are core networks of a same type, maintaining, by the terminal device, the protocol version of the PDCP layer and the protocol version of the RRC layer of the terminal device unchanged,
wherein configuring, by the terminal device, the protocol layer according to the core network types of the first core network and the second core network, comprises:
updating configuration of the PDCP layer corresponding to the first core network to configuration of the PDCP layer corresponding to the second core network,
updating configuration of the RRC layer corresponding to the first core network to configuration of the RRC layer corresponding to the second core network, or
updating configuration of the PDCP layer corresponding to the first core network to configuration of the PDCP layer corresponding to the second core network, and updating configuration of the RRC layer corresponding to the first core network to configuration of the RRC layer corresponding to the second core network.

6. The method of any one of claims 1-4, wherein the method further comprises:
sending, by the terminal device, a request message to an access network device, wherein the request message is used for requesting to acquire the configuration of the PDCP layer and the protocol version of the PDCP layer corresponding to the second core network, and
wherein the method further comprises:
sending, by the terminal device, an NAS message to the second core network, wherein the NAS message is used for triggering the second core network to initiate a protocol data unit, PDU, session establishment process.

7. A terminal device (400) comprising:
a determination module (410) configured to determine that handover from a first core network to a second core network needs to be performed; and
a configuration module (420) configured to configure a protocol layer according to core network types of the first core network and the second core network;
**characterized in that** the configuration module (420) is further configured to:
when the first core network and the second core network are core networks of different types, update configuration of a packet data convergence protocol, PDCP, layer corresponding to the first core network to configuration of a PDCP layer corresponding to the second core network, update a protocol version of the PDCP layer corresponding to the first core network to a protocol version of the PDCP layer corresponding to the second core network, update configuration of an RRC layer corresponding to the first core network to configuration of an RRC layer corresponding to the second core network, and switch a non-access stratum, NAS, entity from a first NAS entity supporting the first core network to a second NAS entity supporting the second core network; and
maintain the configuration of a radio link control, RLC, layer, a media access control, MAC, layer, and a physical, PHY, layer unchanged.

8. The terminal device (400) of claim 7, wherein the determining module (410) is further configured to:
determine that the handover from the first core network to the second core network needs to be performed according to a current service requirement,
or,
when a trigger instruction has been received from a network device, determine that the handover from the first core network to the second core network needs to be performed, wherein the trigger instruction is used for notifying the terminal device to perform the handover from the first core network to the second core network.

9. The terminal device (400) of claim 7, wherein
when the first core network is a core network of a long term evolution, LTE, system and the second core network is a core network of a new wireless, NR, system, the configuration module (420) is further configured to:
update LTE PDCP to NR PDCP, wherein the LTE PDCP is a protocol version of the PDCP layer corresponding to the first core network, and the NR PDCP is a protocol version of the PDCP layer corresponding to the second core network,
wherein when the first core network is a core network of an LTE system, the second core network is a core network of an NR system, the configuration module (420) is further configured to: newly add configuration of a service data adaptation protocol, SDAP, layer and newly add configuration of a user plane, UP, function, based on the configuration of the RRC layer corresponding to the first core network.

10. The terminal device (400) of claim 7, wherein when the first core network is a core network of an NR system and the second core network is a core network of an LTE system, the configuration module (420) is further configured to:
update NR PDCP to LTE PDCP, wherein the NR PDCP is a protocol version of the PDCP layer corresponding to the first core network, and the LTE PDCP is a protocol version of the PDCP layer corresponding to the second core network,
wherein when the first core network is the core network of the NR system and the second core network is the core network of the LTE system, the configuration module (420) is further configured to:
delete configuration of a service data adaptation protocol, SDAP, layer and delete configuration of a user plane, UP, function, based on the configuration of the RRC layer corresponding to the first core network.

11. The terminal device (400) of claim 7 or 8, wherein the configuration module (420) is further configured to:
when the first core network and the second core network are core networks of a same type, maintain the protocol versions of the PDCP layer and RRC layer of the terminal device unchanged,
wherein the configuration module (420) is further configured to:
update configuration of the PDCP layer corresponding to the first core network to configuration of the PDCP layer corresponding to the second core network,
update configuration of the RRC layer corresponding to the first core network to configuration of the RRC layer corresponding to the second core network, or
update configuration of the PDCP layer corresponding to the first core network to configuration of the PDCP layer corresponding to the second core network, and update configuration of the RRC layer corresponding to the first core network to configuration of the RRC layer corresponding to the second core network.

12. The terminal device (400) of claims 9 or 10, wherein the terminal device further comprises:
a second sending module configured to send a request message to an access network device, wherein the request message is used for requesting to acquire the configuration of the PDCP layer and the protocol version of the PDCP layer corresponding to the second core network.

13. The terminal device (400) of any one of claims 7-12, wherein the terminal device further comprises:
a third sending module configured to send a NAS message to the second core network, wherein the NAS message is used for triggering the second core network to initiate a protocol data unit, PDU, session establishment process.

## Patentansprüche

1. Netz-Handover-Verfahren, umfassend, dass:
durch eine Endgeräteinrichtung ermittelt wird (210), dass ein Handover von einem ersten Kernnetz zu einem zweiten Kernnetz durchgeführt werden muss; und
durch die Endgeräteinrichtung eine Protokollschicht gemäß Kernnetztypen des ersten Kernnetzes und des zweiten Kernnetzes konfiguriert wird (220);
**dadurch gekennzeichnet, dass**
das Konfigurieren (220) der Protokollschicht gemäß den Kernnetztypen des ersten Kernnetzes und des zweiten Kernnetzes durch die Endgeräteinrichtung umfasst, dass:
wenn das erste Kernnetz und das zweite Kernnetz Kernnetze verschiedener Typen sind, durch die Endgeräteinrichtung eine Konfiguration einer Paketdatenkonvergenzprotokoll-Schicht, PDCP-Schicht, die dem ersten Kernnetz entspricht, mit einer Konfiguration einer PDCP-Schicht, die dem zweiten Kernnetz entspricht, aktualisiert wird; durch die Endgeräteinrichtung eine Protokollversion der PDCP-Schicht, die dem ersten Kernnetz entspricht, mit einer Protokollversion der PDCP-Schicht, die dem zweiten Kernnetz entspricht, aktualisiert wird; durch die Endgeräteinrichtung eine Konfiguration einer Funkressourcensteuer-Schicht, RRC-Schicht, die dem ersten Kernnetz entspricht, mit einer Konfiguration einer RRC-Schicht, die dem zweiten Kernnetz entspricht, aktualisiert wird; und durch die Endgeräteinrichtung hinsichtlich einer Non-Access Stratum-Entität, NAS-Entität, von einer ersten NAS-Entität, die das erste Kernnetz unterstützt, zu einer zweiten NAS-Entität, die das zweite Kernnetz unterstützt, gewechselt wird; und
durch die Endgeräteinrichtung die Konfiguration einer Funkverbindungssteuer-Schicht, RLC-Schicht, einer Medienzugriffssteuer-Schicht, MAC-Schicht, und einer physikalischen Schicht, PHY-Schicht, unverändert aufrechterhalten wird.

2. Verfahren nach Anspruch 1, wobei das Ermitteln (210) durch die Endgeräteinrichtung, dass das Handover von dem ersten Kernnetz zu dem zweiten Kernnetz durchgeführt werden muss, umfasst, dass:
durch die Endgeräteinrichtung ermittelt wird, dass das Handover von dem ersten Kernnetz zu dem zweiten Kernnetz gemäß einer aktuellen Dienstanforderung durchgeführt werden muss,
oder,
wenn die Endgeräteinrichtung eine Auslösungsanweisung von einer Netzeinrichtung empfangen hat, durch die Endgeräteinrichtung ermittelt wird, dass das Handover von dem ersten Kernnetz zu dem zweiten Kernnetz durchgeführt werden muss, wobei die Auslösungsanweisung zur Benachrichtigung der Endgeräteinrichtung hinsichtlich der Durchführung des Handover von dem ersten Kernnetz zu dem zweiten Kernnetz verwendet wird.

3. Verfahren nach Anspruch 1, wobei
wenn das erste Kernnetz ein Kernnetz eines Long Term Evolution-Systems, LTE-Systems, ist, das zweite Kernnetz ein Kernnetz eines neuen drahtlosen Systems, NR-Systems, ist, das Aktualisieren der Protokollversion der PDCP-Schicht, die dem ersten Kernnetz entspricht, mit der Protokollversion der PDCP-Schicht, die dem zweiten Kernnetz entspricht, umfasst, dass:
durch die Endgeräteinrichtung das LTE PDCP mit dem NR PDCP aktualisiert wird, wobei das LTE PDCP eine Protokollversion der PDCP-Schicht ist, die dem ersten Kernnetz entspricht, und das NR PDCP eine Protokollversion der PDCP-Schicht ist, die dem zweiten Kernnetz entspricht,
wobei, wenn das erste Kernnetz ein Kernnetz eines LTE-Systems ist, das zweite Kernnetz ein Kernnetz eines NR-Systems ist, das Aktualisieren der Konfiguration der RRC-Schicht, die dem ersten Kernnetz entspricht, mit der Konfiguration der RRC-Schicht, die dem zweiten Kernnetz entspricht, umfasst, dass:
basierend auf der Konfiguration der RRC-Schicht, die dem ersten Kernnetz entspricht, durch die Endgeräteinrichtung eine Konfiguration einer Dienstdatenadaptionsprotokoll-Schicht, SDAP-Schicht, neu hinzugefügt wird, und eine Konfiguration einer Benutzerebene-Funktion, UP-Funktion, neu hinzugefügt wird.

4. Verfahren nach Anspruch 1, wobei, wenn das erste Kernnetz ein Kernnetz eines NR-Systems ist und das zweite Kernnetz ein Kernnetz eines LTE-Systems ist, das Aktualisieren der Protokollversion der PDCP-Schicht, die dem ersten Kernnetz entspricht, mit der Protokollversion der PDCP-Schicht, die dem zweiten Kernnetz entspricht, umfasst, dass:
durch die Endgeräteinrichtung das NR PDCP mit dem LTE PDCP aktualisiert wird, wobei das NR PDCP eine Protokollversion der PDCP-Schicht ist, die dem ersten Kernnetz entspricht, und das LTE PDCP eine Protokollversion der PDCP-Schicht ist, die dem zweiten Kernnetz entspricht,
wobei, wenn das erste Kernnetz das Kernnetz des NR-Systems ist und das zweite Kernnetz das Kernnetz des LTE-Systems ist, das Aktualisieren der Konfiguration der RRC-Schicht, die dem ersten Kernnetz entspricht, mit der Konfiguration der RRC-Schicht, die dem zweiten Kernnetz entspricht, umfasst, dass:
basierend auf der Konfiguration der RRC-Schicht, die dem ersten Kernnetz entspricht, durch die Endgeräteinrichtung eine Konfiguration einer Dienstdatenadaptionsprotokoll-Schicht, SDAP-Schicht, und eine Konfiguration einer Benutzerebene-Funktion, UP-Funktion, gelöscht werden.

5. Verfahren nach Anspruch 1 oder 2, wobei das Konfigurieren (220) der Protokollschicht gemäß den Kernnetztypen des ersten Kernnetzes und des zweiten Kernnetzes durch die Endgeräteinrichtung umfasst, dass:
wenn das erste Kernnetz und das zweite Kernnetz Kernnetze desselben Typs sind, die Protokollversion der PDCP-Schicht und die Protokollversion der RRC-Schicht der Endgeräteinrichtung durch die Endgeräteinrichtung unverändert aufrechterhalten werden,
wobei das Konfigurieren der Protokollschicht gemäß den Kernnetztypen des ersten Kernnetzes und des zweiten Kernnetzes durch die Endgeräteinrichtung umfasst, dass:
die Konfiguration der PDCP-Schicht, die dem ersten Kernnetz entspricht, mit der Konfiguration der PDCP-Schicht, die dem zweiten Kernnetz entspricht, aktualisiert wird,
die Konfiguration der RRC-Schicht, die dem ersten Kernnetz entspricht, mit der Konfiguration der RRC-Schicht, die dem zweiten Kernnetz entspricht, aktualisiert wird, oder
die Konfiguration der PDCP-Schicht, die dem ersten Kernnetz entspricht, mit der Konfiguration der PDCP-Schicht, die dem zweiten Kernnetz entspricht, aktualisiert wird, und die Konfiguration der RRC-Schicht, die dem ersten Kernnetz entspricht, mit der Konfiguration der RRC-Schicht, die dem zweiten Kernnetz entspricht, aktualisiert wird.

6. Verfahren nach einem der Ansprüche 1 - 4, wobei das Verfahren ferner umfasst, dass:
durch die Endgeräteinrichtung eine Anforderungsnachricht an eine Zugriffsnetzeinrichtung gesendet wird, wobei die Anforderungsnachricht für eine Anforderung verwendet wird, um die Konfiguration der PDCP-Schicht und die Protokollversion der PDCP-Schicht, die dem zweiten Kernnetz entsprechen, zu erlangen, und
wobei das Verfahren ferner umfasst, dass:
durch die Endgeräteinrichtung eine NAS-Nachricht an das zweite Kernnetz gesendet wird, wobei die NAS-Nachricht verwendet wird, um auszulösen, dass das zweite Kernnetz einen Protokolldateneinheit-Sitzungsherstellungsprozess, PDU-Sitzungsherstellungsprozess, initiiert.

7. Endgeräteinrichtung (400), umfassend:
ein Ermittlungsmodul (410), das ausgestaltet ist, um zu ermitteln, dass ein Handover von einem ersten Kernnetz zu einem zweiten Kernnetz durchgeführt werden muss; und
ein Konfigurationsmodul (420), das ausgestaltet ist, um eine Protokollschicht gemäß Kernnetztypen des ersten Kernnetzes und des zweiten Kernnetzes zu konfigurieren;
**dadurch gekennzeichnet, dass** das Konfigurationsmodul (420) ferner ausgestaltet ist, um:
wenn das erste Kernnetz und das zweite Kernnetz Kernnetze verschiedener Typen sind, eine Konfiguration einer Paketdatenkonvergenzprotokoll-Schicht, PDCP-Schicht, die dem ersten Kernnetz entspricht, mit einer Konfiguration einer PDCP-Schicht, die dem zweiten Kernnetz entspricht, zu aktualisieren, eine Protokollversion der PDCP-Schicht, die dem ersten Kernnetz entspricht, mit einer Protokollversion der PDCP-Schicht, die dem zweiten Kernnetz entspricht, zu aktualisieren, eine Konfiguration einer RRC-Schicht, die dem ersten Kernnetz entspricht, mit einer Konfiguration einer RRC-Schicht, die dem zweiten Kernnetz entspricht, zu aktualisieren, und hinsichtlich einer Non-Access Stratum-Entität, NAS-Entität, von einer ersten NAS-Entität, die das erste Kernnetz unterstützt, zu einer zweiten NAS-Entität, die das zweite Kernnetz unterstützt, zu wechseln; und
die Konfiguration einer Funkverbindungssteuer-Schicht, RLC-Schicht, einer Medienzugriffssteuer-Schicht, MAC-Schicht, und einer physikalischen Schicht, PHY-Schicht, unverändert aufrecht zu erhalten.

8. Endgeräteinrichtung (400) nach Anspruch 7, wobei das Ermittlungsmodul (410) ferner ausgestaltet ist, um:
zu ermitteln, dass das Handover von dem ersten Kernnetz zu dem zweiten Kernnetz gemäß einer aktuellen Dienstanforderung durchgeführt werden muss,
oder,
wenn eine Auslösungsanweisung von einer Netzeinrichtung empfangen wurde, zu ermitteln, dass das Handover von dem ersten Kernnetz zu dem zweiten Kernnetz durchgeführt werden muss, wobei die Auslösungsanweisung zur Benachrichtigung der Endgeräteinrichtung hinsichtlich der Durchführung des Handover von dem ersten Kernnetz zu dem zweiten Kernnetz verwendet wird.

9. Endgeräteinrichtung (400) nach Anspruch 7, wobei
das Konfigurationsmodul (420) ferner ausgestaltet ist, um, wenn das erste Kernnetz ein Kernnetz eines Long Term Evolution-Systems, LTE-Systems, ist und das zweite Kernnetz ein Kernnetz eines neuen drahtlosen Systems, NR-Systems, ist:
das LTE PDCP mit dem NR PDCP zu aktualisieren, wobei das LTE PDCP eine Protokollversion der PDCP-Schicht ist, die dem ersten Kernnetz entspricht, und das NR PDCP eine Protokollversion der PDCP-Schicht ist, die dem zweiten Kernnetz entspricht,
wobei das Konfigurationsmodul (420) ferner ausgestaltet ist, um, wenn das erste Kernnetz ein Kernnetz eines LTE-Systems ist, das zweite Kernnetz ein Kernnetz eines NR-Systems ist:
basierend auf der Konfiguration der RRC-Schicht, die dem ersten Kernnetz entspricht, eine Konfiguration einer Dienstdatenadaptionsprotokoll-Schicht, SDAP-Schicht, neu hinzuzufügen, und eine Konfiguration einer Benutzerebene-Funktion, UP-Funktion, neu hinzuzufügen.

10. Endgeräteinrichtung (400) nach Anspruch 7, wobei das Konfigurationsmodul (420) ferner ausgestaltet ist, um, wenn das erste Kernnetz ein Kernnetz eines NR-Systems ist und das zweite Kernnetz ein Kernnetz eines LTE-System ist:
das NR PDCP mit dem LTE PDCP zu aktualisieren, wobei das NR PDCP eine Protokollversion der PDCP-Schicht ist, die dem ersten Kernnetz entspricht, und das LTE PDCP eine Protokollversion der PDCP-Schicht ist, die dem zweiten Kernnetz entspricht,
wobei das Konfigurationsmodul (420) ferner ausgestaltet ist, um, wenn das erste Kernnetz das Kernnetz des NR-Systems ist und das zweite Kernnetz das Kernnetz des LTE-Systems ist:
basierend auf der Konfiguration der RRC-Schicht, die dem ersten Kernnetz entspricht, eine Konfiguration einer Dienstdatenadaptionsprotokoll-Schicht, SDAP-Schicht, zu löschen, und eine Konfiguration einer Benutzerebene-Funktion, UP-Funktion, zu löschen.

11. Endgeräteinrichtung (400) nach Anspruch 7 oder 8, wobei das Konfigurationsmodul (420) ferner ausgestaltet ist, um:
wenn das erste Kernnetz und das zweite Kernnetz Kernnetze desselben Typs sind, die Protokollversionen der PDCP-Schicht und der RRC-Schicht der Endgeräteinrichtung unverändert aufrecht zu erhalten,
wobei das Konfigurationsmodul (420) ferner ausgestaltet ist, um:
die Konfiguration der PDCP-Schicht, die dem ersten Kernnetz entspricht, mit der Konfiguration der PDCP-Schicht, die dem zweiten Kernnetz entspricht, zu aktualisieren,
die Konfiguration der RRC-Schicht, die dem ersten Kernnetz entspricht, mit der Konfiguration der RRC-Schicht, die dem zweiten Kernnetz entspricht, zu aktualisieren, oder
die Konfiguration der PDCP-Schicht, die dem ersten Kernnetz entspricht, mit der Konfiguration der PDCP-Schicht, die dem zweiten Kernnetz entspricht, zu aktualisieren, und die Konfiguration der RRC-Schicht, die dem ersten Kernnetz entspricht, mit der Konfiguration der RRC-Schicht, die dem zweiten Kernnetz entspricht, zu aktualisieren.

12. Endgeräteinrichtung (400) nach Anspruch 9 oder 10, wobei die Endgeräteinrichtung ferner umfasst:
ein zweites Sendemodul, das ausgestaltet ist, um eine Anforderungsnachricht an eine Zugriffsnetzeinrichtung zu senden,
wobei die Anforderungsnachricht für eine Anforderung verwendet wird, um die Konfiguration der PDCP-Schicht und die Protokollversion der PDCP-Schicht, die dem zweiten Kernnetz entsprechen, zu erlangen.

13. Endgeräteinrichtung (400) nach einem der Ansprüche 7 - 12, wobei die Endgeräteinrichtung ferner umfasst:
ein drittes Sendemodul, das ausgestaltet ist, um eine NAS-Nachricht an das zweite Kernnetz zu senden,
wobei die NAS-Nachricht verwendet wird, um auszulösen, dass das zweite Kernnetz einen Protokolldateneinheit-Sitzungsherstellungsprozess, PDU-Sitzungsherstellungsprozess, initiiert.

## Revendications

1. Procédé de transfert de réseau comprenant les étapes consistant à :
déterminer, par un dispositif terminal, qu'un transfert d'un premier réseau central vers un deuxième réseau central doit être effectué (210) ; et
configurer, par le dispositif terminal, une couche de protocole en fonction des types de réseau central du premier réseau central et du deuxième réseau central (220) ;
**caractérisé en ce que**
l'étape consistant à configurer, par le dispositif terminal, la couche de protocole en fonction des types de réseau central du premier réseau central et du deuxième réseau central (220), comprend les étapes consistant à :
lorsque le premier réseau central et le deuxième réseau central sont des réseaux centraux de types différents, mettre à jour, par le dispositif terminal, la configuration d'une couche de protocole de convergence de données par paquets (packet data convergence protocol), PDCP, correspondant au premier réseau central à une configuration d'une couche PDCP correspondant au deuxième réseau central ; mettre à jour, par le dispositif terminal, une version de protocole de la couche PDCP correspondant au premier réseau central à une version de protocole de la couche PDCP correspondant au deuxième réseau central ; mettre à jour, par le dispositif terminal, la configuration d'une couche de commande de ressources radio (radio resource control), RRC, correspondant au premier réseau central à une configuration d'une couche RRC correspondant au deuxième réseau central ; et commuter, par le dispositif terminal, une entité de strate de non-accès (non-access stratum), NAS, d'une première entité NAS supportant le premier réseau central à une deuxième entité NAS supportant le deuxième réseau central ; et
maintenir inchangée, par le dispositif terminal, la configuration d'une couche de commande de liaison radio (radio link control), RLC, d'une couche de commande d'accès au support (media access control), MAC, et d'une couche physique, PHY.

2. Procédé selon la revendication 1, dans lequel l'étape consistant à déterminer, par le dispositif terminal, que le transfert du premier réseau central vers le deuxième réseau central doit être effectué (210), comprend les étapes consistant :
déterminer, par le dispositif terminal, que le transfert du premier réseau central vers le deuxième réseau central doit être effectué en fonction d'une exigence de service actuelle, ou
lorsque le dispositif terminal a reçu une instruction de déclenchement d'un dispositif de réseau, déterminer, par le dispositif terminal, que le transfert du premier réseau central vers le deuxième réseau central doit être effectué, l'instruction de déclenchement étant utilisée pour notifier au dispositif terminal d'effectuer le transfert du premier réseau central vers le deuxième réseau central.

3. Procédé selon la revendication 1, dans lequel,
lorsque le premier réseau central est un réseau central d'un système à évolution à long terme (long term évolution), LTE, et que le deuxième réseau central est un réseau central d'un nouveau système NR sans fil, l'étape consistant à mettre à jour la version de protocole de la couche PDCP correspondant au premier réseau central à la version de protocole de la couche PDCP correspondant au deuxième réseau central, comprend l'étape consistant :
mettre à jour, par le dispositif terminal, le PDCP LTE à PDCP NR, le PDCP LTE étant une version de protocole de la couche PDCP correspondant au premier réseau central et le PDCP NR étant une version de protocole de la couche PDCP correspondant au deuxième réseau central,
dans lequel, lorsque le premier réseau central est un réseau central d'un système LTE et que le deuxième réseau central est un réseau central d'un système NR, l'étape consistant à mettre à jour la configuration de la couche RRC correspondant au premier réseau central à la configuration de la couche RRC correspondant au deuxième réseau central, comprend les étapes consistant à :
ajouter, par le dispositif terminal, une configuration d'une couche de protocole d'adaptation de données de service (service data adaptation protocol), SDAP, et ajouter une configuration d'une fonction de plan utilisateur (user plane), UP, sur la base de la configuration de la couche RRC correspondant au premier réseau central.

4. Procédé selon la revendication 1, dans lequel, lorsque le premier réseau central est un réseau central d'un système NR et que le deuxième réseau central est un réseau central d'un système LTE, l'étape consistant à mettre à jour la version de protocole de la couche PDCP correspondant au premier réseau central à la version de protocole de la couche PDCP correspondant au deuxième réseau central, comprend les étapes consistant à :
mettre à jour, par le dispositif terminal, le PDCP NR à PDCP LTE, le PDCP NR étant une version de protocole de la couche PDCP correspondant au premier réseau central et le PDCP LTE étant une version de protocole de la couche PDCP correspondant au deuxième réseau central,
dans lequel, lorsque le premier réseau central est le réseau central du système NR et que le deuxième réseau central est le réseau central du système LTE, l'étape consistant à mettre à jour la configuration de la couche RRC correspondant au premier réseau central à la configuration de la couche RRC correspondant au deuxième réseau central, comprend les étapes consistant à :
supprimer, par le dispositif terminal, la configuration d'une couche de protocole d'adaptation de données de service (service data adaptation protocol), SDAP, et la configuration d'une fonction de plan utilisateur (user plane), UP, sur la base de la configuration de la couche RRC correspondant au premier réseau central.

5. Procédé selon la revendication 1 ou 2, dans lequel l'étape consistant à configurer, par le dispositif terminal, la couche de protocole en fonction des types de réseau central du premier réseau central et du deuxième réseau central (220), comprend les étapes consistant à :
lorsque le premier réseau central et le deuxième réseau central sont des réseaux centraux d'un même type, maintenir inchangée, par le dispositif terminal, la version de protocole de la couche PDCP et la version de protocole de la couche RRC du dispositif terminal,
dans lequel l'étape consistant à configurer, par le dispositif terminal, la couche de protocole en fonction des types de réseau central du premier réseau central et du deuxième réseau central, comprend les étapes consistant à :
mettre à jour la configuration de la couche PDCP correspondant au premier réseau central à la configuration de la couche PDCP correspondant au deuxième réseau central,
mettre à jour la configuration de la couche RRC correspondant au premier réseau central à la configuration de la couche RRC correspondant au deuxième réseau central, ou
mettre à jour la configuration de la couche PDCP correspondant au premier réseau central à la configuration de la couche PDCP correspondant au deuxième réseau central et mettre à jour la configuration de la couche RRC correspondant au premier réseau central à la configuration de la couche RRC correspondant au deuxième réseau central.

6. Procédé selon l'une quelconque des revendications 1 à 4, dans lequel le procédé comprend en outre l'étape consistant à :
envoyer, par le dispositif terminal, un message de demande à un dispositif de réseau d'accès, le message de demande étant utilisé pour demander à acquérir la configuration de la couche PDCP et la version de protocole de la couche PDCP correspondant au deuxième réseau central, et
dans lequel le procédé comprend en outre l'étape consistant à :
envoyer, par le dispositif terminal, un message NAS au deuxième réseau central, le message NAS étant utilisé pour déclencher le deuxième réseau central afin de lancer un processus d'établissement de session d'unité de données de protocole (protocol data unit), PDU.

7. Dispositif terminal (400) comprenant :
un module de détermination (410) configuré pour déterminer qu'un transfert d'un premier réseau central vers un deuxième réseau central doit être effectué ; et
un module de configuration (420) configuré pour configurer une couche de protocole en fonction des types de réseau central du premier réseau central et du deuxième réseau central ;
**caractérisé en ce que** le module de configuration (420) est en outre configuré pour :
lorsque le premier réseau central et le deuxième réseau central sont des réseaux centraux de types différents, mettre à jour la configuration d'une couche de protocole de convergence de données par paquets (packet data convergence protocol), PDCP, correspondant au premier réseau central à une configuration d'une couche PDCP correspondant au deuxième réseau central, mettre à jour une version de protocole de la couche PDCP correspondant au premier réseau central à une version de protocole de la couche PDCP correspondant au deuxième réseau central, mettre à jour la configuration d'une couche de commande de ressources radio (radio resource control), RRC, correspondant au premier réseau central à une configuration d'une couche RRC correspondant au deuxième réseau central, et commuter une entité de strate de non-accès (non-access stratum), NAS, d'une première entité NAS supportant le premier réseau central à une deuxième entité NAS supportant le deuxième réseau central ; et
maintenir inchangée la configuration d'une couche de commande de liaison radio (radio link control), RLC, d'une couche de commande d'accès au support (media access control), MAC, et d'une couche physique, PHY.

8. Dispositif terminal (400) selon la revendication 7, dans lequel le module de détermination (410) est en outre configuré pour :
déterminer que le transfert du premier réseau central vers le deuxième réseau central doit être effectué en fonction d'une exigence de service actuelle, ou
lorsqu'une instruction de déclenchement a été reçue d'un dispositif de réseau, déterminer que le transfert du premier réseau central vers le deuxième réseau central doit être effectué, l'instruction de déclenchement étant utilisée pour notifier au dispositif terminal d'effectuer le transfert du premier réseau central vers le deuxième réseau central.

9. Dispositif terminal (400) selon la revendication 7, dans lequel,
lorsque le premier réseau central est un réseau central d'un système à évolution à long terme (long term évolution), LTE, et que le deuxième réseau central est un réseau central d'un nouveau système NR sans fil, le module de configuration (420) est en outre configuré pour :
mettre à jour le PDCP LTE à PDCP NR, le PDCP LTE étant une version de protocole de la couche PDCP correspondant au premier réseau central et le PDCP NR étant une version de protocole de la couche PDCP correspondant au deuxième réseau central,
dans lequel, lorsque le premier réseau central est un réseau central d'un système LTE et que le deuxième réseau central est un réseau central d'un système NR, le module de configuration (420) est en outre configuré pour :
ajouter une configuration d'une couche de protocole d'adaptation de données de service (service data adaptation protocol), SDAP, et ajouter une configuration d'une fonction de plan utilisateur (user plane), UP, sur la base de la configuration de la couche RRC correspondant au premier réseau central.

10. Dispositif terminal (400) selon la revendication 7, dans lequel, lorsque le premier réseau central est un réseau central d'un système NR et que le deuxième réseau central est un réseau central d'un système LTE, le module de configuration (420) est en outre configuré pour :
mettre à jour le PDCP NR à PDCP LTE, le PDCP NR étant une version de protocole de la couche PDCP correspondant au premier réseau central et le PDCP LTE étant une version de protocole de la couche PDCP correspondant au deuxième réseau central,
dans lequel, lorsque le premier réseau central est le réseau central du système NR et que le deuxième réseau central est le réseau central du système LTE, le module de configuration (420) est en outre configuré pour :
supprimer la configuration d'une couche de protocole d'adaptation de données de service (service data adaptation protocol), SDAP, et la configuration d'une fonction de plan utilisateur (user plane), UP, sur la base de la configuration de la couche RRC correspondant au premier réseau central.

11. Dispositif terminal (400) selon la revendication 7 ou 8, dans lequel le module de configuration (420) est en outre configuré pour :
lorsque le premier réseau central et le deuxième réseau central sont des réseaux centraux d'un même type, maintenir inchangées les versions de protocole de la couche PDCP et de la couche RRC du dispositif terminal,
dans lequel le module de configuration (420) est en outre configuré pour :
mettre à jour la configuration de la couche PDCP correspondant au premier réseau central à la configuration de la couche PDCP correspondant au deuxième réseau central,
mettre à jour la configuration de la couche RRC correspondant au premier réseau central à la configuration de la couche RRC correspondant au deuxième réseau central, ou
mettre à jour la configuration de la couche PDCP correspondant au premier réseau central à la configuration de la couche PDCP correspondant au deuxième réseau central et mettre à jour la configuration de la couche RRC correspondant au premier réseau central à la configuration de la couche RRC correspondant au deuxième réseau central.

12. Dispositif terminal (400) selon la revendication 9 ou 10, dans lequel le dispositif terminal comprend en outre :
un deuxième module d'envoi configuré pour envoyer un message de demande à un dispositif de réseau d'accès, le message de demande étant utilisé pour demander à acquérir la configuration de la couche PDCP et la version de protocole de la couche PDCP correspondant au deuxième réseau central.

13. Dispositif terminal (400) selon l'une quelconque des revendications 7 à 12, dans lequel le dispositif terminal comprend en outre :
un troisième module d'envoi configuré pour envoyer un message NAS au deuxième réseau central, le message NAS étant utilisé pour déclencher le deuxième réseau central afin de lancer un processus d'établissement de session d'unité de données de protocole (protocol data unit), PDU.
